# EUROPEAN PATENT SPECIFICATION

(11) **EP 4 488 039 B1**
(45) Date of publication and mention of the grant of the patent: **12.08.2026**
(21) Application number: 24020222.6
(22) Date of filing: 03.07.2024
(51) Int. Cl.: B29C 65/02, B29C 65/08, B29C 65/16

(54) **DEVICE FOR WELDING A CASING CONTAINING AN INNER MEMBER SUBJECT TO A PREDETERMINED PRELOAD, AND PROCESS THEREOF**
VORRICHTUNG ZUM SCHWEISSEN EINES GEHÄUSES MIT EINEM INNENSTÜCK, DAS EINER BESTIMMTEN VORSPANNUNG UNTERWORFEN IST, UND VERFAHREN DAZU
DISPOSITIF DE SOUDAGE D'UN BOÎTIER CONTENANT UN ÉLÉMENT INTERNE SOUMIS À UNE PRÉCHARGE PRÉDÉTERMINÉE ET PROCÉDÉ CORRESPONDANT

(30) Priority: 05.07.2023 IT 202300013980
(43) Date of publication of application: 08.01.2025
(73) Proprietor: CEMAS Elettra S.r.l., 10022 Carmagnola (TO) (IT)
(72) Inventor: PERLO, Michele, 10022 Carmagnola (TO) (IT); BAGGI, Marco, 10022 Carmagnola (TO) (IT); MARZINE, Riccardo, 10022 Carmagnola (TO) (IT)
(74) Representative: Mola, Edoardo

(56) References cited:
- WO-A1-87/04111
- US-A- 3 224 163
- US-A- 4 702 688

## Description

The present invention refers to a system which allows welding the components of a casing containing an inner member which must be subjected to the action of a preload of a predetermined amount at the end of the welding process.

The casing, which includes a pair of half-shells of plastic material coupled together, constitutes a sealing protective shell of the inner member which can consist of a septum, a lamina, a rod or a cylindrical barrel, for example forming part of a per se known mechanism, to which the predetermined preload must be applied to allow correct working in operation.

However, since the half-shells of the casing are usually made of opaque plastic material, it is not possible to visually monitor the achievement of the condition in which the inner member reaches the contact with both half-shells, nor to accurately evaluate the extent of the mechanical preload applied to it by welding the half-shells of the casing.

In fact, since the inner member is closed inside the casing, it is not possible to use any physical measurement method, and the impossibility of accurately evaluating the preload to which the inner member is subject leads to uncertainty in the correct working of the contents of the casing and to high possibility of obtaining defective parts.

To evaluate, at least in a first approximation, the load applied to the member inside the casing, calculation systems were used based on the measurement of the interpenetration of the half-shells following their mutual welding. However, since this evaluation is not based on the direct measurement of the pressure applied to the inner member but, instead, it depends on the theoretical assumption that the components of different casings and the related inner members are always the same, therefore with the same dimensions and with the same characteristics of the materials, which in practice plastic components cannot satisfy, this approximation turns out to be too coarse to be used satisfactorily in practice because the results obtained cannot be adequate in terms of repeatability and accuracy.

In particular, it was found that the thrust necessary to apply the preload to the half-shells during the welding operation is different from that necessary to correctly preload the inner member, and that this thrust could prove to be too high and lead to damage the inner member with the consequence that the inner mechanism of the casing may not work or work incorrectly.

To effectively check the correct working of the welding machine, it is essential to precisely determine the instant in which the inner member reaches the contact with both half-shells, so as to immediately adapt the preload thrust in order to obtain, at the end of the welding and of the action of preload on the half-shells of the casing, a predetermined preload applied by the half-shells to the inner member, and that this procedure is repeatable for each welding cycle of a casing.

The prior document US 4 702 688 A relates to a device for welding a container or casing comprising a pair of half-shells of plastic material between which is interposed an inner member intended to or capable of coming into contact with both half-shells and to be subjected to the action of a predetermined preload at the end of the welding of the container. This known device comprises a press assembly acting on a movable press plane to cause its movement perpendicular to the press plane, a first seat for positioning a first half-shell of the container mounted movably parallel to the press plane, a counter element superimposed on the first seat on the side opposite the press plane and provided with a second seat for positioning a second half-shell of the container, which counter element is associated with a welding assembly for welding the half-shells, and an elastic strain member interposed between the press plane and the first seat.

US 3 224 163 A describes a packaging apparatus for heat sealing a lid on a tray portion of a food package.

WO 87/04111 A1 refers to a sound projector for a vehicle horn, consisting of a body and a lid made of heat-sealable plastic material and joined together by welding to form a unitary structure.

In order to overcome the aforementioned drawbacks, the object of the invention is a welding device having the features mentioned in the attached claims.

More particularly, the device comprises a position transducer adapted to detect the relative position of the first seat with respect to the press plane, which comprises a scale member extending from the press plane parallel to said elastic strain member, and a cursor sensor connected to the support platform, said counter element being stationary.

By virtue of these features, the welding device of the invention allows to precisely determine the instant in which the predetermined preload, different from a preselected service initial preload, must be applied to the casing, so that the components inside the casing cannot be damaged or subjected to an insufficient preload for the correct working, and in which carry out the completing of the welding the two half-shells in the configuration of the casing which will determine the predetermined final preload acting on the inner member.

According to a preferred feature of the invention, each of the half-shells has, at its end intended to be welded to the other half-shell, a perimeter edge, and both said first and second seats have a resting surface intended to rest the perimeter edge of the respective half-shell, for welding the half-shells at said edge, the inner member being substantially elongated and, in the welded condition of said half-shells, extends transversely to the perimeter edges of said half-shells, its opposite ends being intended to rest against the half-shells, respectively.

According to a further preferred feature, the elastic strain member is made by means of a helical spring the opposite ends of which are operatively in contact with said support platform and with said press plane, respectively.

In this manner, the welding device is provided with an elastic strain member that is easy to produce, to the full advantage of the simplicity of the welding device structure and the containment of the costs associated with its manufacturing.

Furthermore, in the welding device according to the invention, the movement of the support platform with respect to the press plane is preferably guided by guide means comprising a pair of guide columns that extend on opposite sides with respect to said elastic strain member and that cross the support platform, each guide column being conveniently associated with a respective linear rolling bearing.

The invention also has as its object a welding process which allows the two half-shells of the casing to be welded by means of the welding device considered above, while the half-shells are subjected to the action of a preselected service preload of welding which is modulated in order to obtain, after the welding step, a predetermined and desired final preload of the inner member of the casing.

In particular, the process includes the steps of:
- positioning said pair of half-shells of the casing so that the first half-shell (12) engages said first seat and the second half-shell engages said second seat of the counter element,
- operating the press assembly to move the press plane towards the first seat by applying a thrust to the press plane against the action of the elastic strain member until subjecting the latter to a preselected service preload,
- operating the welding unit to start the mutual welding process of the half-shells and to determine their partial softening,
- completing the welding process of the two half-shells by interrupting the action of the welding unit to allow cooling of the half-shells of the casing and polymerization of the welding.

According to the invention the process is characterized in that
- a relative inner member is interposed between said pair of half-shells of the casing,
- the counter element is stationary,
- the press assembly is operated until the opposite ends of the inner member reach a contact condition with the inner surface of both half-shells, which condition occurs when the variation in the relative position of the first seat with respect to the press plane, detected by the position transducer, becomes null,
- the amount of the preselected service preload is reduced to a value corresponding to said predetermined preload, by reducing the thrust applied to the press plane and, consequently, to the elastic strain member.

By virtue of these features, it is possible to obtain an extremely reliable welding of the two half-shells of the casing and the application of the predetermined preload to the inner member with extreme precision.

According to a preferred feature of the process of the invention, the welding of the two half-shells takes place at their perimeter edges.

According to another preferred feature of the process of the invention, as a result of the softening of the half-shells and the application of said predetermined preload by means of the elastic strain member, the support platform undergoes a further small movement towards the stationary counter element due to the deformation of the two half-shells.

According to a further preferred feature of the process of the invention, the predetermined preload is substantially less than the preselected service preload, and, for example, it is less than half the preselected service preload.

Further characteristics and advantages of the invention will appear more clearly from the detailed description that follows, provided by way of a non-limiting example and referring to the attached drawings in which:
Figure 1 is a schematic perspective view of a shell shaped casing made up of two half-shells welded together at a perimeter edges thereof using the welding device of the invention,
Figure 2 is a schematic axially sectioned side elevational view of the casing of Figure 1, containing an inner member,
Figure 3 is an exploded perspective view which schematically shows the casing of Figure 2 and its inner member,
Figure 4 is an exploded perspective view of the welding device of the invention before welding a casing,
Figure 5 is a perspective view of the device of Figure 4 in an initial step of the welding process of the casing,
Figure 6 is a front elevational view of the device of Figure 5,
Figure 7 is a side elevational view of the device of Figure 5, e
Figures 8a to 8f are schematic side elevational views of the welding device of the invention which sequentially show the main steps of the welding process carried out by means of the device itself.

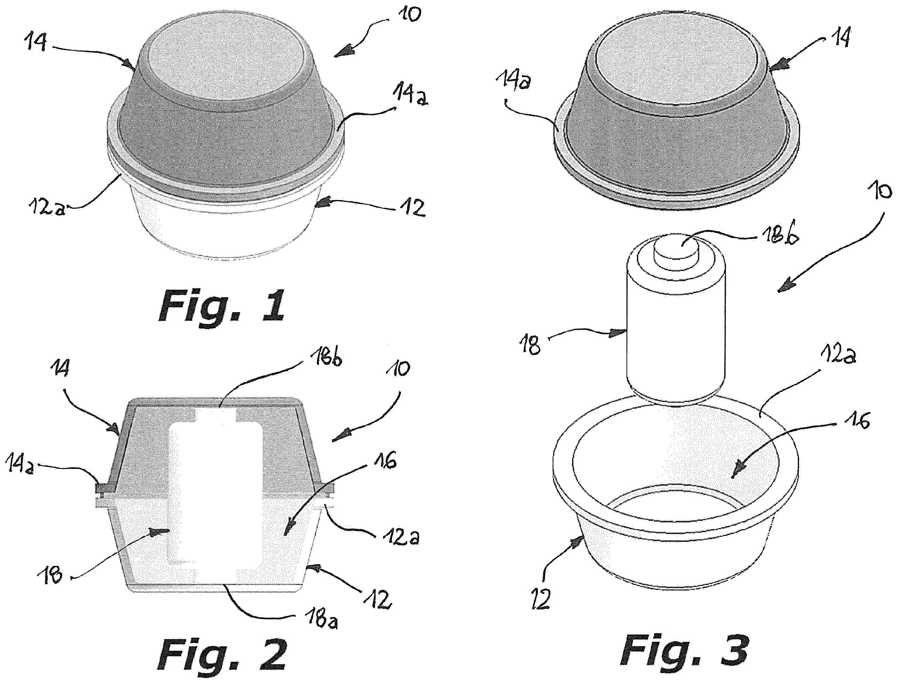

With initial reference to figures 1 to 3, 10 indicates as a whole a shell shaped casing including a pair of half-shells 12 and 14 of plastic material, for example opaque, lower and upper respectively with reference to the drawings, welded together so as to define a sealed inner cavity 16.

Preferably, the half-shells 12, 14 each have a cup shape and are provided with an outer perimeter edge 12a, 14a which extends cantilevered, at which a welding operation will be carried out.

In the cavity 16 there is accommodated an inner member 18 which, in the most general case, is part of a mechanism of a per se known type (not shown in detail) of any type, for example an electro-mechanical actuator capable of generating vibrations as a result of the supply of an electric current.

More specifically, the inner member 18 can consist of a septum, a lamina, a rod, a cylindrical barrel or another element having a generally elongated shape arranged transversely to the perimeter edges 12a and 14a. In the Figures, the member 18 is represented as a cylindrical barrel whose opposite ends 18a and 18b must be placed in contact with the half-shells 12 and 14, respectively, under the action of a predetermined preload after the welding of these half-shells, so that the member 18 and the related mechanism can work correctly.

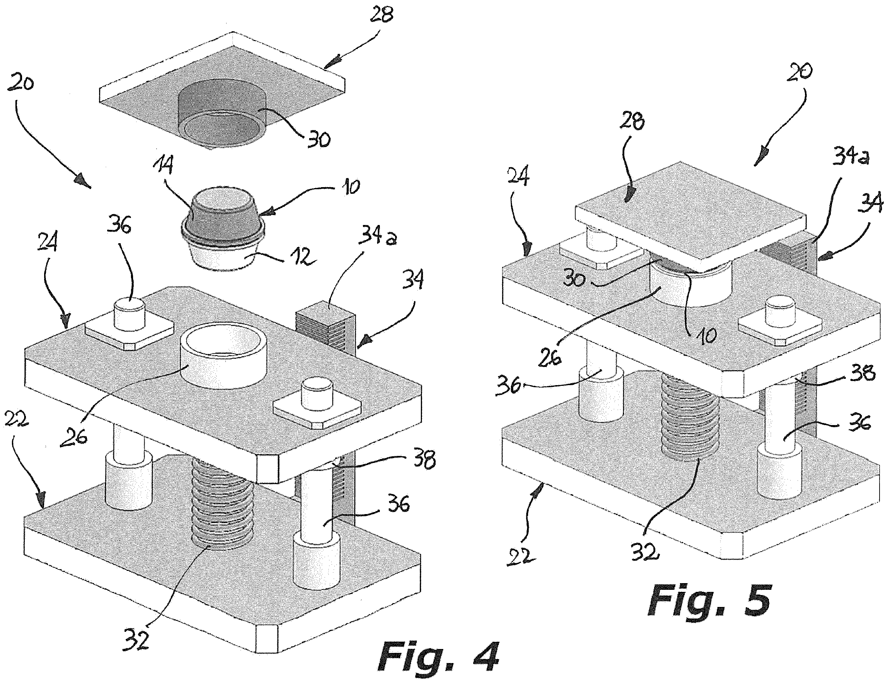

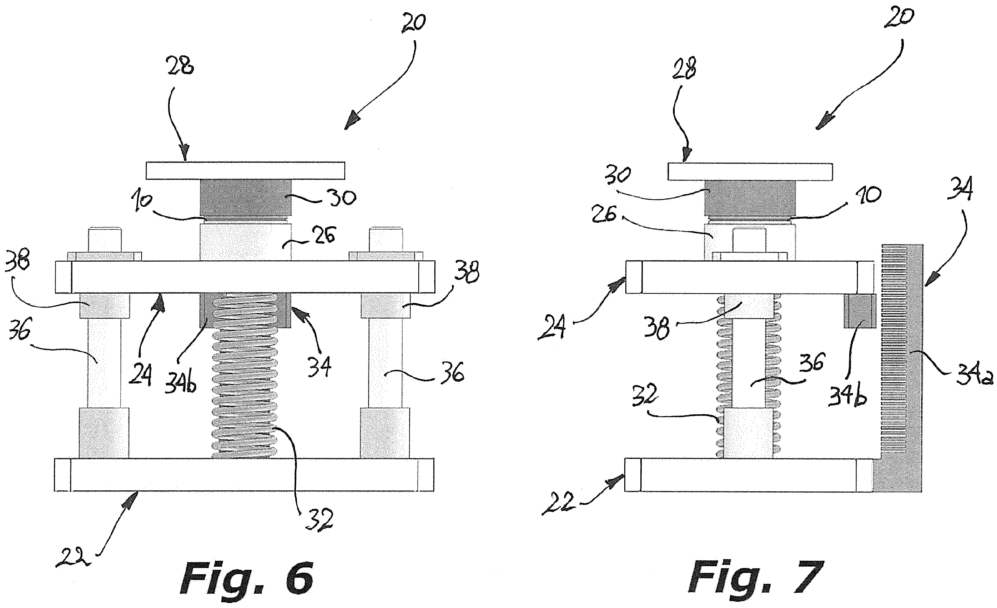

The welding operation is carried out by means of a welding device shown in Figures 4 to 7 and indicated 20 as a whole, which allows the half-shells 12, 14 to be sealingly-welded while they are subject to a welding service preload preselected according to the specific application, which preload is modulated during welding in order to generate a predetermined and desired preload acting on the member 18 at the end of the welding operation, the final predetermined preload being able to be different from the service preload used at the beginning of the welding of the casing 10, as will be clarified further in the following of the description.

With reference to Figures 4 to 7, the device 20 includes a lower press assembly (not shown as it is per se known) acting in such a manner as to vertically move a movable press plane 22 along a direction perpendicular to the latter.

A first seat 26 is arranged above the press plane 22, the shape of which corresponds to that of the lower half-shell 12, for engagement by this half-shell, which seat 26 is conveniently fixed to a platform 24 substantially parallel to the press plane 22 and movable parallel to the latter.

In a position axially aligned with the first seat 26 and facing it, there is a second seat 30 the shape of which corresponds to that of the upper half-shell 14, for the engagement by this half-shell, which is connected to a stationary counter element 28 generally plate-shaped and superimposed on the platform 24, the counter element 28 being associated with a welding unit of a per se known type, for example a vibration, ultrasonic or laser welding unit.

Both seats 26 and 30 have a surface parallel respectively to the platform 24 and to the stationary counter element 28 for resting the perimeter edges 12a, 14a of the relative half-shells 12, 14, to facilitate welding of the latter at their edge 12a, 14a.

Between the press plane 22 and the first seat 26, in other words between the press plane 22 and the platform 24, an elastic strain member is interposed, preferably made by means of a helical spring 32, for the purpose of elastically transmitting to the platform 24 a thrust to which the press plane 22 is subjected due to the operation of the press assembly. In particular, the spring 34 has a first end in contact with the press plane 22 and the opposite end abutting against the platform 24.

The movement of the support platform 24 with respect to the press plane 22 is preferably guided by guide means which include a pair of parallel guide columns 36 which extend from opposite sides with respect to the spring 32 from the press plane 22 and which cross the support platform 24. Each guide column 36 is conveniently associated with a respective linear rolling bearing 38, such as a linear ball bearing, at the platform 24.

Furthermore, a position transducer indicated 34 as a whole is associated with the press plane 22 and the platform 24, for the purpose of detecting an instantaneous relative position of the platform 24, and therefore of the first seat 26, with respect to the press plane 22. The transducer 34 includes a scale element 34a which extends from the press plane 22 parallel to the spring 32 and a cursor provided with magnetic sensor 34b connected to the support platform 24, or vice versa.

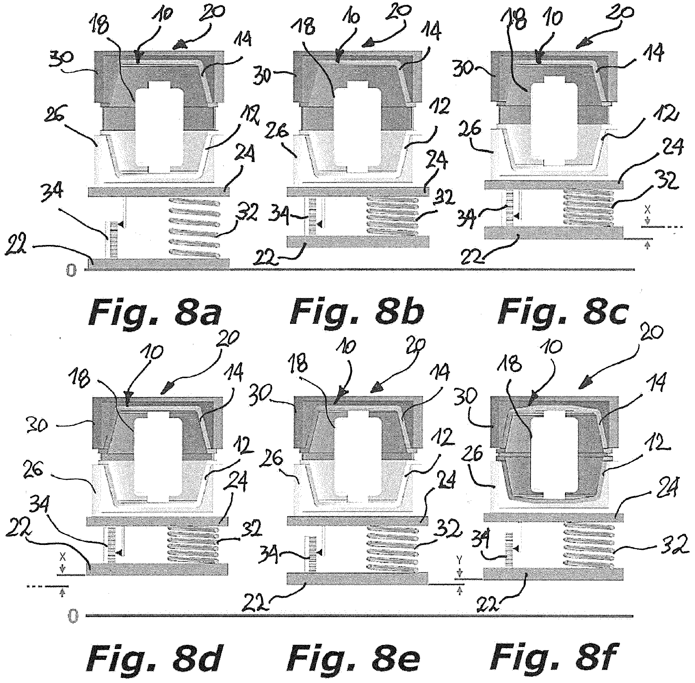

The welding process of the casing 10 is carried out by means of the welding device 20 as described below with particular reference to Figures 8a to 8f.

Initially, the device 20 is in the configuration of Figure 4 with the stationary counter element 28 provided with the second seat 30 spaced from the platform 24. The casing 10 composed of the half-shells 12 and 14 in the overlapping configuration with interposed the inner member 18 can therefore be arranged in such a manner that the half-shell 12 engages the first seat 26 connected to the platform 24.

As a result of the application of a thrust to the press plane 22 in the direction of the platform 24 through the operation of the press assembly, the platform 24 approaches the counter element 28 until the upper half-shell 14 engages the seat 30, which causes the half-shells 12 and 14 to move closer together until they come into contact with each other without the shell 10 still being subjected to a load (Figure 8a). The reference line identified as 0 in Figures 8a to 8f corresponds to the position of the press plane 22 in this configuration.

A service preload preselected according to the application is then applied by moving the press plate 22 after the first contact of the half-shells 12 and 14, whereby the spring 32 begins to compress (Figure 8b). This service preload could be, for example, of the order of magnitude of approximately 100 N.

The service preload is transmitted to the platform 24 which moves towards the counter element 28 and the relative seat 30, so that the welding device 20 can assume its configuration corresponding to the beginning of the welding step. Since in this configuration the inner member 18 has not yet reached contact with both the half-shells 12, 14, it is not yet subject to any load, and the service preload applied to the spring 32 is totally absorbed by the contact surface between the half-shells 12, 14.

The welding step is then started by activating the welding unit. The heat generated during this step causes a softening of the plastic material of the half-shells 12 and 14 which partially yield, so that the platform 24 undergoes a further movement towards the stationary counter element 28. This movement is recovered by the press plane 22 which moves correspondingly to keep the deformation of the spring 32 constant, on which the correct service preload applied to the casing 10 in the welding swtep depends, which must initially remain constant (Figure 8c).

Continuing the softening of the two half-shells 12 and 14, their interpenetration takes place at the welding area, or at the edges 12a and 14a, which causes a further movement of the platform 24 towards the stationary counter element 28, which is recovered with a further movement of the press plate 22 to keep the extension of the spring 32 constant and therefore the correct welding pressure on the mating surface of the half-shells 12 and 14 at their joining line under the action of the service preload (Figure 8d). This allows obtaining characteristics of consistency and repeatability of the welding, and maintaining the resistance of the casing 10. This further movement, due to the yielding of the half-shells 12 and 14, is indicated with X between the Figures 8c and 8d.

The movement of the press plane 22 and the platform 24 continues until the opposite ends 18a and 18b of the inner member reach contact with the inner surfaces of the half-shells 12 and 14, respectively, with the consequence that the thrust due to the service preload, which until now was supported by the casing 10, is transmitted to the member 18 progressively with the yielding of the material of the half-shells 12 and 14.

At this point the position transducer 34 detects that the relative position of the platform 24, and therefore of the first seat 26, with respect to the press plane 22 remains constant, in other words that the variation in the position detected by the transducer 34 cancels out, so that the device 20 is able to signal via the transducer 34 that the inner member 18 has reached the contact with the half-shells 12 and 14.

The variation of the preload applied to the casing 10 is carried out as quickly as possible, in order to reduce the service preload to a value corresponding to the predetermined preload to which the inner member 18 must be subjected, so as not to risk compromising the integrity of the inner member 18.

This predetermined preload is substantially less than the service preload, and is at least less than half the preselected service preload. For example, if the service preload preselected is of the order of magnitude of approximately 100 N, the predetermined preload may be approximately 45 N or less, depending on the specific application.

In this step, the welding operation is not interrupted but continues under the action of the predetermined preload so as to maintain the half-shells 12 and 14 in the same state of softening obtained previously to preserve the integrity of their mutual welding.

As a result of the reduction of the preload applied to the casing 10, the spring 32 partially relaxes and, consequently, the press plate 22 moves away from the platform 24 (Figure 8e) which remains stationary compared to the previous step.

At the end of this step, the press plane 22 and the platform 24 still undergo a small movement towards the stationary counter element 28, indicated with Y between the Figures 8e and 8f, due to the fact that the half-shells 12 and 14 undergo an arching deformation resulting from the thrust originated by the predetermined preload applied to the inner member 18 (Figure 8f).

The welding operation is interrupted when there is certainty that the predetermined preload has been applied to the inner member 18, and therefore the cooling step of the half-shells 12 and 14 and the polymerization of the welding carried out between the half-shells can begin, whereby the same deformed half-shells 12 and 14 maintain the preload applied to the member 18.

## Claims

1. Device for welding a casing including a pair of half-shells of plastic material (12, 14) between which an inner member (18) is interposed which is intended to come into contact with both the half-shells (12, 14) and to be subjected to the action of a predetermined preload at the end of the welding of the casing (10), comprising a press assembly acting on a movable press plane (22) to cause a movement thereof perpendicular to the press plane (22), a first seat (26) for positioning a first half-shell (12) of the casing (10) movably mounted parallel to the press plane (22) and fixed to a support platform (24) substantially parallel to the press plane (22), a counter element (28) superimposed on said first seat (26) on the side opposite to the press plane (22) and provided with a second seat (30) for positioning a second half-shell (14) of the casing (10), which counter element (28) is associated with a welding unit for welding said half-shells (12, 14), and an elastic strain member (32) interposed between the press plane (22) and said first seat (26),
**characterized in that** it comprises a position transducer (34) adapted to detect the relative position of the first seat (26) with respect to the press plane (22), which comprises a scale member (34a) extending from the press plane (22) parallel to said elastic strain member (32), and a cursor sensor (34b) connected to the support platform (24), said counter element (28) being stationary.

2. Welding device according to claim 1, **characterized in that** each of said half-shells (12, 14) has, at its end intended to be welded to the other half-shell (14, 12), a perimeter edge (12a, 14a), and **in that** both said first and second seats (26, 30) have a resting surface intended to rest the perimeter edge (12a, 14a) of the respective half-shell (12, 14), for welding the half-shells (12, 14) at said edge (12a, 14a).

3. Welding device according to claim 2, **characterized in that** said inner member (18) is substantially elongated and, in the welded condition of said half-shells, extends transversely to the perimeter edges (12a, 14a) of said half-shells (12, 14), its opposite ends (18a, 18b) being intended to rest against the half-shells (12, 14), respectively.

4. Welding device according to any one of claims 1 to 3, **characterized in that** the elastic strain member is made by means of a helical spring (32) the opposite ends of which are operatively in contact with said support platform (24) and with said press plane (22), respectively.

5. Welding device according to any one of claims 1 to 4, **characterized in that** the movement of the support platform (24) with respect to the press plane (22) is guided by guide means comprising a pair of parallel guide columns (36) that extend on opposite sides with respect to said elastic strain member (32) and that cross the support platform (24).

6. Welding device according to claim 5, **characterized in that** each guide column (36) is associated with a respective linear rolling bearing (38).

7. Process for welding a casing containing an inner member, by means of a welding device according to any one of claims 1 to 6, comprising the steps of:
- positioning said pair of half-shells (12, 14) of the casing (10) so that the first half-shell (12) engages said first seat (26) and the second half-shell (14) engages said second seat (30) of the counter element (28),
- operating the press assembly to move the press plane (22) towards the first seat (26) by applying a thrust to the press plane (22) against the action of the elastic strain member (32) until subjecting the latter to a preselected service preload,
- operating the welding unit to start the mutual half-shells (12, 14) welding process and to determine their partial softening,
- completing the welding process of the two half-shells (12, 14) by interrupting the action of the welding unit to allow cooling of the half-shells (12, 14) of the casing (10) and polymerization of the welding,
**characterized in that**
- a relative inner member (18) is interposed between said pair of half-shells (12, 14) of the casing (10),
- the counter element (28) is stationary,
- the press assembly is operated until the opposite ends of the inner member (18) reach a contact condition with the inner surface of both half-shells (12, 14), which condition occurs when the variation in the relative position of the first seat (26) with respect to the press plane (22), detected by the position transducer (34), becomes null,
- the amount of the preselected service preload is reduced to a value corresponding to said predetermined preload, by reducing the thrust applied to the press plane (22) and, consequently, to the elastic strain member (32).

8. Process according to claim 7, **characterized in that** the welding of the two half-shells (12, 14) occurs at their perimeter edges (12a, 14a).

9. Process according to claim 7 or 8, **characterized in that** as a result of the softening of the half-shells (12, 14) and the application of said predetermined preload by means of the elastic strain member (32), the support platform (24) undergoes a further small movement (Y) towards the stationary counter element (28), due to the deformation of the two half-shells (12, 14).

10. Process according to any one of claims 7 to 9, **characterized in that** said predetermined preload is substantially less than said preselected service preload and, for example, it is less than half of the preselected service preload.

## Patentansprüche

1. Vorrichtung zum Schweißen eines Gehäuses, bestehend aus zwei Kunststoff-Halbschalen (12, 14), zwischen denen ein inneres Stuck (18) angeordnet ist, das mit den beiden Halbschalen (12, 14) in Kontakt treten und am Ende des Schweißvorgangs des Gehäuses (10) einer vorbestimmten Vorspannung ausgesetzt werden soll, umfassend eine Pressvorrichtung, die auf eine bewegliche Pressplatte (22) wirkt und deren Bewegung senkrecht zur Pressplatte (22) bewirkt, einen ersten Sitz (26) zur Positionierung einer ersten Halbschale (12) des Gehäuses (10), die beweglich parallel zur Pressplatte (22) gelagert und an einer im Wesentlichen parallel zur Pressplatte (22) verlaufenden Trägerplattform (24) befestigt ist, sowie ein Gegenelement (28), das auf der der Pressplatte (22) gegenüberliegenden Seite des ersten Sitzes (26) angeordnet ist und einen zweiten Sitz (30) zur Positionierung einer zweiten Halbschale (14) des Gehäuses (10) aufweist, wobei das Gegenelement (28) mit einer Schweißeinheit verbunden ist, zum Verschweißen der Halbschalen (12, 14) und ein zwischen der Presseplatte (22) und dem ersten Sitz (26) angeordnetes elastisches Spannungselement (32),
**dadurch gekennzeichnet, dass** sie einen zur Erfassung der relativen Position des ersten Sitzes (26) zur Pressplatte (22) angepassten Positionssensor (34) umfasst, der ein Waagenglied (34a) umfasst, das sich von der Pressplatte (22) parallel zum elastischen Spannungselement (32) erstreckt, und mit einem mit der Trägerplattform (24) verbundenen Cursor-Sensor (34b), wobei das Gegenelement (28) stationär ist.

2. Schweißvorrichtung nach Anspruch 1, **dadurch gekennzeichnet, dass** jede der Halbschalen (12, 14) an ihrem Ende, das mit der anderen Halbschale (14, 12) verschweißt werden soll, eine umlaufende Kante (12a, 14a) aufweist und dass der erste und zweite Sitz (26, 30) eine Auflagefläche besitzen, die die umlaufende Kante (12a, 14a) der jeweiligen Halbschale (12, 14) stützt, um die Halbschalen (12, 14) an dieser Kante (12a, 14a) zu verschweißen.

3. Schweißvorrichtung nach Anspruch 2, **dadurch gekennzeichnet, dass** das innere Element (18) im Wesentlichen länglich ist und sich im verschweißten Zustand der Halbschalen quer zu den umlaufenden Kanten (12a, 14a) der Halbschalen (12, 14) erstreckt, wobei seine gegenüberliegenden Enden (18a, 18b) jeweils an den Halbschalen (12, 14) anliegen.

4. Schweißvorrichtung nach einem der Ansprüche 1 bis 3, **dadurch gekennzeichnet, dass** das elastische Spannungselement mittels einer Schraubenfeder (32) ausgebildet ist, deren gegenüberliegende Enden jeweils in funktionalem Kontakt mit der Trägerplattform (24) und der Pressplatte (22) stehen.

5. Schweißvorrichtung nach einem der Ansprüche 1 bis 4, **dadurch gekennzeichnet, dass** die Bewegung der Trägerplattform (24) relativ zur Pressplatte (22) durch Führungsmittel geführt wird, die aus zwei parallelen Führungssäulen (36) bestehen, die sich beidseitig des elastischen Spannungselements (32) erstrecken und die Trägerplattform (24) durchdringen.

6. Schweißvorrichtung nach Anspruch 5, **dadurch gekennzeichnet, dass** jede Führungssäule (36) mit einem zugehörigen Linearlager (38) verbunden ist.

7. Verfahren zum Schweißen eines Gehäuses mit einem Innenelement unter Verwendung einer Schweißvorrichtung nach einem der Ansprüche 1 bis 6, umfassend die folgenden Schritte:
- Positionieren der beiden Halbschalen (12, 14) des Gehäuses (10) derart, dass die erste Halbschale (12) in den ersten Sitz (26) und die zweite Halbschale (14) in den zweiten Sitz (30) des stationären Gegenelements (28) eingreift,
- Betätigen der Pressvorrichtung zum Bewegen der Pressplatte (22) in Richtung des ersten Sitzes (26) durch Aufbringen eines Schubs auf die Pressplatte (22) entgegen der Wirkung des elastischen Spannungselements (32), bis dieses einer voreingestellten Betriebsvorspannung ausgesetzt ist,
- Betätigen der Schweißeinheit zum Starten des gegenseitigen Verschweißens der Halbschalen (12, 14) und zu Bestimmen ihrer partiellen Erweichung;
- Abschließen des Schweißprozesses zum Abschluss des Verschweißens der beiden Halbschalen (12, 14) mit Unterbrechung der Aktion der Schweißeinheit, um die Kühlung der Halbschalen (12, 14) des Gehäuses (10) und eine Polymerisation der Schweißung zu gestatten,
**dadurch gekennzeichnet, dass**:
- ein jeweiliges Innenelement (18) zwischen den beiden Halbschalen (12, 14) des Gehäuses (10) angeordnet ist,
- das Gegenelement (28) stationär ist,
- die Pressvorrichtung ist eingestellt, bis die gegenüberliegenden Enden des Innenelements die Innenfläche der beiden Halbschalen (12, 14) berühren, wobei dieser Zustand ist erreicht, wenn die vom Positionssensor (34) erfasste Änderung der relativen Position des ersten Sitzes (26) zur Pressplatte (22) null wird,
- die Menge der voreingestellten Service-Vorspannung wird durch Verringerung des auf die Pressplatte (22) und damit auf das elastische Spannungselement (32) wirkenden Schubs auf einen Wert entsprechend dieser voreingestellten Vorspannung reduziert.

8. Verfahren nach Anspruch 7, **dadurch gekennzeichnet, dass** die Verschweißung der beiden Halbschalen (12, 14) an ihren umfänglichen Kanten (12a, 14a) erfolgt.

9. Verfahren nach Anspruch 7 oder 8, **dadurch gekennzeichnet, dass** die Trägerplattform (24) nach dem Erweichen der Halbschalen (12, 14) und dem Aufbringen der voreingestellten Vorspannung mittels des elastischen Spannungselements (32) aufgrund der Verformung der beiden Halbschalen (12, 14), eine kleine zusätzliche Bewegung (Y) in Richtung des stationären Gegenelements (28) erfährt.

10. Verfahren nach einem der Ansprüche 7 bis 9, **dadurch gekennzeichnet, dass** die voreingestellte Vorspannung wesentlich geringer ist als die voreingestellte Service-Vorspannung und beispielsweise weniger als die Hälfte der voreingestellten Service-Vorspannung beträgt.

## Revendications

1. Dispositif de soudage d'un boîtier comprenant une paire de demi-coques en matière plastique (12, 14) entre lesquelles est interposé un élément intérieur (18) destiné à entrer en contact avec les deux demi-coques (12, 14) et à être soumis à l'action d'une précharge prédéterminée à la fin du soudage du boîtier (10), comprenant un ensemble de presse agissant sur un plan de presse mobile (22) pour provoquer un mouvement de celui-ci perpendiculaire au plan de presse (22), un premier siège (26) pour positionner une première demi-coque (12) du boîtier (10) monté mobile parallèlement au plan de presse (22) et fixé à une plateforme de support (24) sensiblement parallèle au plan de presse (22), un contre-élément (28) superposé audit premier siège (26) du côté opposé au plan de presse (22) et muni d'un deuxième siège (30) pour positionner une deuxième demi-coque (14) du boîtier (10), le contre-élément (28) étant associé à une unité de soudage pour souder lesdites demi-coques (12, 14), et un élément de contrainte élastique (32) interposé entre le plan de presse (22) et ledit premier siège (26),
**caractérisé en ce qu'**il comprend un transducteur de position (34) adapté pour détecter la position relative du premier siège (26) par rapport au plan de presse (22), qui comprend un élément scalaire (34a) s'étendant du plan de presse (22) parallèlement audit élément de contrainte élastique (32), et un capteur de curseur (34b) connecté à la plateforme de support (24), ledit contre-élément (28) étant stationnaire.

2. Dispositif de soudage selon la revendication 1, **caractérisé en ce que** chacune des demi-coques (12, 14) présente, à son extrémité destinée à être soudée à l'autre demi-coque (14, 12), un bord périmétrique (12a, 14a), et **en ce que** lesdits premier et deuxième sièges (26, 30) ont une surface d'appui destinée à l'appui du bord périmétrique (12a, 14a) de la demi-coque respective (12, 14), pour souder les demi-coques (12, 14) au niveau dudit bord (12a, 14a).

3. Dispositif de soudage selon la revendication 2, **caractérisé en ce que** ledit élément intérieur (18) est sensiblement allongé et, dans la condition soudée desdites demi-coques, il s'étend transversalement au bords périmétraux (12a, 14a) desdites demi-coques (12, 14), ses extrémités opposées (18a, 18b) étant destinées à s'appuyer contre les demi-coques (12, 14), respectivement.

4. Dispositif de soudage selon l'une quelconque des revendications 1 à 3, **caractérisé en ce que** l'élément de contrainte élastique est réalisé au moyen d'un ressort hélicoïdal (32) dont les extrémités opposées sont en contact fonctionnel avec ladite plateforme de support (24) et avec ledit plan de presse (22), respectivement.

5. Dispositif de soudage selon l'une quelconque des revendications 1 à 4, **caractérisé en ce que** le mouvement de la plateforme de support (24) par rapport au plan de presse (22) est guidé par des moyens de guidage comprenant une paire de colonnes de guidage parallèles (36) qui s'étendent de part et d'autre de l'élément de contrainte élastique (32) et traversent la plateforme de support (24).

6. Dispositif de soudage selon la revendication 5, **caractérisé en ce que** chaque colonne de guidage (36) est associée à un roulement linéaire respectif (38).

7. Procédé de soudage d'un boîtier contenant un élément intérieur, au moyen d'un dispositif de soudage selon l'une quelconque des revendications 1 à 6, **caractérisé en ce qu'**il comprend les étapes suivantes :
- positionner ladite paire de demi-coques (12, 14) du boîtier (10) de sorte que la première demi-coque (12) s'engage dans ledit premier siège (26) et que la deuxième demi-coque (14) s'engage dans ledit deuxième siège (30) de l'élément du contre-élément stationnaire (28),
- actionner l'ensemble de presse pour déplacer le plan de presse (22) vers le premier siège (26) en appliquant une poussée au plan de presse (22) contre l'action de l'élément de contrainte élastique (32) jusqu'à soumettre ce dernier à une précharge de service présélectionnée,
- actionner l'unité de soudage pour démarrer le processus de soudage mutuel des demi-coques (12, 14) et déterminer leur ramollissement partiel,
- achever le processus de soudage des deux demi-coques (12, 14) en interrompant l'action de l'unité de soudage pour permettre le refroidissement des demi-coques (12, 14) du boîtier (10) et la polymérisation de la soudure.
**caractérisé en ce que**
- un élément intérieur respectif (18) est interposé entre ladite paire de demi-coques (12, 14) du boîtier (10),
- le contre-élément (28) est stationnaire,
- l'ensemble de presse est agencé jusqu'à ce que les extrémités opposées de l'élément intérieur se rejoignent dans une condition de contacte avec la surface intérieure des deux demi-coques (12, 14), ladite condition se vérifiant lorsque la variation dans la position relative du premier siège (26) par rapport au plan de presse (22), détectée par le transducteur de position (34), ne devient nulle,
- la quantité de la précharge de service présélectionnée est réduite à une valeur correspondante à ladite précharge présélectionnée, en réduisant la poussée appliquée au plan de presse (22), et par conséquence, à l'élément de contrainte élastique (32).

8. Procédé selon la revendication 7, **caractérisé en ce que** le soudage des deux demi-coques (12, 14) se vérifie à leurs bords périphériques (12a, 14a).

9. Procédé selon la revendication 7 ou 8, **caractérisé en ce que**, suite au ramollissement des demi-coques (12, 14) et à l'application de ladite précharge prédéterminée au moyen de l'élément de contrainte élastique (32), la plateforme de support (24) subit un petit mouvement supplémentaire (Y) vers le contre-élément stationnaire (28) en raison de la déformation des deux demi-coques (12, 14).

10. Procédé selon l'une quelconque des revendications 7 à 9, **caractérisé en ce que** ladite précharge prédéterminée est sensiblement inférieure à ladite précharge de service présélectionnée et, par exemple, est inférieure à la moitié de la précharge de service présélectionnée.
